# EUROPÄISCHE PATENTSCHRIFT

(11) **EP 1 498 444 B1**
(45) Veröffentlichungstag und Bekanntmachung des Hinweises auf die Patenterteilung: **18.01.2006**
(21) Anmeldenummer: 04014852.0
(22) Anmeldetag: 24.06.2004
(51) Int. Cl.: C08J 3/12, B29B 9/00, C08L 101/00

(54) **Verwendung von Organopolysiloxangranulat als Additiv**
Use of organopolysiloxane granulate as additive
Utilisation de granulat d'organopolysiloxanes comme additif

(30) Priorität: 04.07.2003 DE 10330287
(43) Veröffentlichungstag der Anmeldung: 19.01.2005
(73) Patentinhaber: Wacker-Chemie GmbH, 81737 München (DE)
(72) Erfinder: Geck, Michael, Dr., 84489 Burghausen (DE); Jerschow, Peter, Dr., 84489 Burghausen (DE); Staiger, Gerhard, Dr., 84375 Kirchdorf (DE); Fuhrmann, Oliver, 83361 Kienberg (DE)
(74) Vertreter: Schuderer, Michael

(56) Entgegenhaltungen:
- EP-A- 1 028 140
- EP-B- 0 570 978
- US-A- 5 840 831

## Beschreibung

Die Erfindung betrifft die Verwendung eines Organopolysiloxangranulats als Additiv in thermoplastischen Kunststoffen.

Siliconbasierende Monomere und Polymere finden zunehmend Verwendung in der Kunststoffindustrie, von der Polymerherstellung über die Polymercompoundierung bis hin zur Endproduktfertigung. Niedermolekulare Organopolysiloxane mit Viskositäten bis zu 1.000 mm²/s finden beispielsweise weit verbreiteten Einsatz in der Kunststoffindustrie als externe Formtrennmittel, die hierzu auf die Oberfläche der Form aufgebracht werden. Seit ca. 30 Jahren werden höhermolekulare Organopolysiloxane im Viskositätsbereich von 10.000 - 100.000 mm²/s als interne Additive in thermoplastischen Polymeren eingesetzt. Dadurch werden Verarbeitungsvorteile und Verbesserungen der Oberflächeneigenschaften erzielt; dazu zählen beispielsweise ein niedrigerer Reibungskoeffizient, bessere Gleiteigenschaften, verbesserte Abriebfestigkeit, bessere Verschleißwerte, verbesserte Kratzfestigkeit und Oberflächenglätte, bessere Entformbarkeit, niedrigerer Ausschuss, leichtere Verarbeitbarkeit, verbesserter Durchsatz, niedrigerer Energieverbrauch bei der Verarbeitung und schnellere Taktzeiten bei Formgebungsprozessen. Organopolysiloxane weisen darüber hinaus bessere Stabilität als herkömmliche Verarbeitungshilfsmittel und Gleitmittel (Wachse, Fettsäurederivate) auf. Ultrahochmolekulare Organopolysiloxane mit Viskositäten von 1.000.000 bis 100.000.000 mm²/s besitzen vergleichbare Additiveigenschaften wie höhermolekulare Organopolysiloxane, in der Regel bei besserer Effektivität und höherer Effizienz. Dieses verbesserte Leistungsprofil wird auf höhere mechanische Wechselwirkungen zwischen den langkettigen ultrahochmolekularen Organopolysiloxanen und den Polymerketten der Thermoplasten zurückgeführt und resultiert in einer höheren Permanenz, reduziertem Migrationsverhalten und besserer Bedruckbarkeit, Beklebbarkeit und Verschweißbarkeit.

Flüssige Organopolysiloxanadditive, vor allem mit höheren und hohen Viskositäten haben jedoch den Nachteil, dass sie schwierig und nur unter Verwendung von speziellen technischen Einrichtungen während des Extrusionsprozesses in Thermoplastschmelzen eingebracht werden können. Vorzugsweise werden bei Extrusionsprozessen feste Bestandteile und besonders bevorzugt feste Bestandteile in konventioneller Kunststoffgranulat- bzw. Pelletform eingesetzt. Feste Bestandteile in Pulverform haben den Nachteil, dass homogene Vormischungen (dry blends) aus Kunststoffgranulat und pulverförmigen Additiven schwieriger zu fertigen sind und leichter zu Entmischungen während Lagerung und Dosierung neigen als Vormischungen, die aus mehreren verschiedenen Granulaten gefertigt werden. Entmischungsvorgänge und unregelmäßige Dosierung sind problematisch speziell wenn pulverförmige Additive, die in der Regel in geringen Mengen zugesetzt werden, mit Polymergranulat abgemischt werden. Ungleichmäßige Dosierung führt zu inhomogener Produktqualität, was unerwünscht ist. Aus diesem Grund wurden Konzentrate bzw. Masterbatche an höherviskosen und ultrahochviskosen flüssigen Organopolysiloxanen in konventioneller Granulat- bzw. Pelletform entwickelt und sind heute Stand der Technik. Diese Organopolysiloxan-Konzentrate weisen jedoch eine Reihe von Nachteilen auf. So beträgt der Gehalt an Organopolysiloxan nur 20% bis maximal 50%. Das Trägermaterial hierbei ist ein thermoplastischer Kunststoff, der im Konzentrat zu 50-80% enthalten ist. Das Trägermaterial limitiert das Einsatzspektrum des Granulats, da es dem jeweiligen Kunststoff, dem das Konzentrat hinzugefügt wird, angepasst sein muss. Angesichts der Vielzahl thermoplastischer Kunststoffe erfordert dies konsequenterweise, eine Vielzahl an Konzentraten von Organopolysiloxan mit unterschiedlichen thermoplastischen Trägermaterialien bereitzustellen. Dies ist von Nachteil vor allem für den Kunststoffcompoundeur oder den Endverarbeiter, der eine Vielzahl verschiedener Kunststoffe compoundiert bzw. verarbeitet und demzufolge eine Vielzahl unterschiedlich geträgerter Organopolysiloxankonzentrate bereithalten muss.

Organopolysiloxan-Pulver weisen den Nachteil der unterschiedlichen Trägermaterialien nicht auf. Pulverförmige Zusammensetzungen, enthaltend ein flüssiges Organopolysiloxan, Kieselsäure und ein spezielles Siliconharz sowie dessen Verwendung zur Modifizierung von Thermoplasten ist in der Patentschrift US 5,346,941 beschrieben. Die Patentschrift US 5,391,594 beschreibt ferner Zusammensetzungen enthaltend einen Kunststoff und ein Siliconpulver mit einer Teilchengröße von 1 bis 1.000 µm, welches ein Polydiorganosiloxan und Kieselsäure umfasst. Pulverförmige Organopolysiloxanadditive weisen jedoch den eingangs beschriebenen Nachteil auf, dass sie im Gemisch mit Granulaten zu Entmischung und ungleichmäßiger Dosierung neigen, was im Falle von Additiven, die in der Regel in geringen Mengen zugesetzt werden, besonders unerwünscht ist, da es zu inhomogener Produktqualität führt.

Die Europäische Offenlegungsschrift EP 1 028 140 A1 offenbart granulierte peroxidisch vernetzende Silikonkautschuke enthaltend Polyorganosiloxane, einen Füllstoff, Borsäure und Calciumstearat.

Aufgabe der Erfindung war es, eine feste Darreichungsform an Organopolysiloxan als Additiv für thermoplastische Kunststoffe zur Verfügung zu stellen, die für die technische Verarbeitung von thermoplastischen Materialien geeignet ist und gleichzeitig gute Additiveigenschaften sowie eine hohe Konzentration an Organopolysiloxan besitzt und die Nachteile der konventionellen Darreichungsformen Konzentrat und Pulver nicht aufweist.

Die Aufgabe wird durch die Verwendung der erfindungsgemäßen Organopolysiloxangranulate gelöst.

Gegenstand der Erfindung ist demnach die Verwendung eines Organopolysiloxangranulats enthaltend
(A) mindestens ein Polyorganosiloxan aus Einheiten der allgemeinen Formel I:

   RᵣSiO_{(4-r/2)} (I),

   worin
   - R: unabhängig von einander, substituierte oder unsubstituierte Kohlenwasserstoffreste und
   - r: 0, 1, 2 oder 3 mit der Maßgabe, dass der durchschnittlichen Zahlenwert von r in einem Bereich von 1,9 bis 2,1 liegt, bedeuten,
(B) 1 bis 200 Gewichtsteile bezogen auf 100 Gewichtsteile des Polyorganosiloxans (A) eines verstärkenden oder nicht-verstärkenden Füllstoffs oder eines Gemisches von verstärkenden oder nicht-verstärkenden Füllstoffen,
(C) 0,01 bis 20 Gewichtsteile bezogen auf 100 Gewichtsteile des Polyorganosiloxans (A) mindestens eines Additiv zur Herstellung eines Granulats und
(D) gegebenenfalls weitere Hilfsstoffe ausgewählt aus der Gruppe enthaltend Verarbeitungshilfsmittel, Weichmacher, Pigmente und Stabilisatoren, mit der Maßgabe, dass das Organopolysiloxangranulat eine Teilchengröße von 1 bis 100 mm aufweist, als Additiv für thermoplastische Kunststoffe.

Bevorzugte Reste R sind beispielsweise Alkyl-, Aryl-, Alkylaryl-, Alkenyl- oder Cycloalkylgruppen, die substituiert oder unsubstituiert sowie gegebenenfalls durch Heteroatome unterbrochen sein können.

Beispiele für Kohlenwasserstoffreste R sind Alkylreste, wie beispielsweise Methyl-, Ethyl-, n-Propyl-, iso-Propyl-, n-Butyl-, iso-Butyl-, tert.-Butyl-, n-Pentyl-, iso-Pentyl-, neoPentyl-, tert.-Pentylrest, Hexylreste, wie beispielsweise n-Hexylrest, Heptylreste, wie beispielsweise n-Heptylrest, Octylreste, wie der n-Octylrest und iso-Octylreste, wie beispielsweise 2,2,4-Trimethylpentylrest, Nonylreste, wie beispielsweise n-Nonylrest, Decylreste, wie beispielsweise n-Decylrest, Dodecylreste, wie beispielsweise n-Dodecylrest, Octadecylreste, wie beispielsweise n-Octadecylrest; Cycloalkylreste, wie beispielsweise Cyclopentyl-, Cyclohexyl-, Cycloheptylreste und Methylcyclohexylreste; Arylreste, wie beispielsweise Phenyl-, Biphenyl-, Naphtyl- und Anthryl-und Phenanthrylrest; Alkarylreste, wie beispielsweise o-, m-, p-Tolylreste, Xylylreste und Ethylphenylreste; Aralkylreste, wie beispielsweise Benzylrest, der α- und der β-Phenylethylrest.

Beispiele für substituierte Kohlenwasserstoffreste R sind halogenierte Alkylreste, wie beispielsweise 3-Chlorpropyl-, der 3,3,3-Trifluorpropyl- und der Perfluorhexylethylrest, halogenierte Arylreste, wie beispielsweise p-Chlorphenyl- und der p-Chlorbenzylrest.

Bevorzugt handelt es sich bei Rest R um Wasserstoffatom- und Kohlenwasserstoffreste mit 1 bis 8 Kohlenstoffatomen, besonders bevorzugt um den Methylrest.

Weitere Beispiele für Reste R sind der Vinyl-, Allyl-, Methallyl-, 1-Propenyl-, 1-Butenyl-, 1-Pentenylrest, 5-Hexenyl-Butadienyl-, Hexadienyl-, Cyclopentenyl-, Cyclopentadienyl-, Cyclohexenyl-, Ethinyl-, Propargyl- und 1-Propinylrest.

In einer weiteren bevorzugten erfindungsgemäßen Ausführungsform handelt es sich bei Rest R um Alkenylreste mit 2 bis 8 Kohlenstoffatomen, besonders bevorzugt um den Vinylrest.

Bei gegebenenfalls substituierten Kohlenwasserstoffresten mit 1 bis 8 Kohlenstoffatomen sind der Methyl-, Vinyl-, Phenyl- und 3,3,3-Trifluorpropylrest besonders bevorzugt.

Vorzugsweise sind an mindestens 70 Mol% der in dem Polyorganosiloxan (A) aus Einheiten der Formel (I) enthaltenen Si-Atome Alkylreste, insbesondere Methylreste, gebunden. Enthalten die Polyorganosiloxane neben an Silicium gebundenen Methyl- oder 3,3,3-Trifluorpropylresten sowie eine Kombination von beiden noch an Silicium gebundene Vinyl- oder Phenylreste sowie eine Kombination von beiden, so handelt es sich bei letzteren bevorzugt um Mengen von 0,001 bis 30 Mol%.

Vorzugsweise bestehen die Polyorganosiloxane (A) überwiegend aus Diorganosiloxaneinheiten. Die Endgruppen der Polyorganosiloxane können Trialkylsiloxygruppen, insbesondere der Trimethylsiloxyrest oder der Dimethylvinylsiloxyrest, sein; es können aber auch ein oder mehrere dieser Alkylgruppen durch Hydroxygruppen oder Alkoxygruppen, wie Methoxy- oder Ethoxyreste, ersetzt sein.

Bei den Polyorganosiloxanen (A) kann es sich um Flüssigkeiten oder hochviskose Substanzen handeln. Vorzugsweise weisen die Polyorganosiloxane (A) bei 25°C eine Viskosität zwischen 10³ und 10⁸ mPas auf.

Es kann eine Art von Polyorganosiloxan (A), es kann auch ein Gemisch aus mindestens zwei verschiedenen Arten von Polyorganosiloxan (A) eingesetzt werden.

Vorzugsweise werden bei den erfindungsgemäßen Organopolysiloxangranulaten keine Vernetzer eingesetzt.

Für einige Anwendungen kann es jedoch von Vorteil sein, dass Vernetzer eingesetzt werden, beispielsweise wenn eine Anbindung des Organopolysiloxans an den Thermoplasten erwünscht ist. In diesem Falle werden den erfindungsgemäßen Polyorganosiloxangranulaten als Vernetzer vorzugsweise Peroxide, wie Dibenzoylperoxid, Bis(2,4-dichlorbenzoyl)-peroxid, Dicumylperoxid, Bis-4-Methylbenzoylperoxid, 2,5-Dimethylhexan-2,5-di-tert.-butylperoxid oder 2,5-Bis-(tert.-butylperoxy)-2,5-dimethylhexan sowie deren Gemische eingesetzt.

Des Weiteren enthalten die erfindungsgemäßen Polyorganosiloxane (A) verstärkende und/oder nichtverstärkende Füllstoffe.

Beispiele für verstärkende Füllstoffe sind pyrogene oder gefällte Kieselsäuren mit BET-Oberflächen von mindestens 50 m²/g.

Die genannten Kieselsäurefüllstoffe können hydrophilen Charakter haben oder nach bekannten Verfahren hydrophobiert sein. Hierzu sei beispielsweise auf die deutsche Offenlegungsschrift DE 38 39 900 A1 verwiesen, deren diesbezügliche Offenbarung Teil der vorliegenden Anmeldung sein soll. Im allgemeinen erfolgt dann die Hydrophobierung mit 1 bis 20 Gew.-% Hexamethyldisilazan oder Divinyltetramethyldisilazan oder einem Gemisch von beiden und 0,5 bis 5 Gew.-% Wasser, jeweils bezogen auf das Gesamtgewicht des Polyorganosiloxans (A), wobei diese Reagenzien vorteilhafterweise in einer geeigneten Mischvorrichtung, wie beispielsweise Kneter oder Innenmischer, zum bereits vorgelegten Polyorganosiloxan (A) gegeben werden, bevor die hydrophile Kieselsäure sukzessiv in die Masse eingearbeitet wird.

Beispiele für nichtverstärkende Füllstoffe sind Quarzmehl, Diatomeenerde, Calciumsilikat, Zirkoniumsilicat, Zeolithe, Metalloxidpulver, wie Aluminium-, Titan-, Eisen- oder Zinkoxid, Bariumsilikat, Bariumsulfat, Calciumcarbonat, Gips, Polytetrafluorethylenpulver. Des Weiteren können als Füllstoffe faserige Komponenten, wie Glasfasern und Kunststofffasern, eingesetzt werden. Die BET-Oberfläche dieser Füllstoffe liegt vorzugsweise unter 50 m²/g.

Die erfindungsgemäßen Organopolysiloxangranulate enthalten Füllstoff (B) in Mengen von 1 bis 200 Gewichtsteilen, bevorzugt 30 bis 100 Gewichtsteilen, jeweils bezogen auf 100 Gewichtsteile Polyorganosiloxan (A).

Die erfindungsgemäßen Organopolysiloxangranulate enthalten ferner ein Additiv (C) für die Herstellung eines Granulats aus Organopolysiloxan. Das Additiv (C) ist in EP 1 028 140 A1 beschrieben, deren diesbezügliche Offenbarung Teil der vorliegenden Anmeldung sein soll, und ermöglicht es, ein voll rieselfähiges Organopolysiloxangranulat herzustellen. Das erfindungsgemäße Additiv enthält Borsäure und Wasser, welches bevorzugt entionisiert oder von höherer Reinheit ist, sowie gegebenenfalls Fettsäuresalze und wird in Mengen von 0,01 bis 20 Gew.-%, bevorzugt 0,1 bis 4 Gew.-% und besonders bevorzugt 0,1 bis 2 Gew.-% dem Organopolysiloxan (A) zugesetzt.

In einer bevorzugten Ausführungsform wird das erfindungsgemäße Additiv in Form einer Additivzusammensetzung enthaltend Organopolysiloxan eingesetzt. In dieser bevorzugten Ausführungsform ist Borsäure in der Zusammensetzung des Additivs (C) in Mengen von vorzugsweise 2 bis 20 Gew.-%, besonders bevorzugt 3 bis 14 Gew.-%, ganz besonders bevorzugt 8 bis 9 Gew.-% enthalten. Das Organopolysiloxan ist vorzugsweise ein lineares Organopolysiloxan, wie Dimethylpolysiloxan, Phenylmethylpolysiloxan, Vinylmethylpolysiloxan und Trifluorpropylpolysiloxan. Es weist eine bei 25°C gemessene Viskosität von vorzugsweise 10⁴ bis 10⁸ mPas und besonders bevorzugt von 10⁵ bis 10⁸ mPas auf. Das Organopolysiloxan ist in der Zusammensetzung dieser bevorzugten Ausführungsform in Mengen von vorzugsweise 30 bis 90 Gew.-%, besonders bevorzugt 40 bis 80 Gew.-% und ganz besonders bevorzugt 60 bis 70 Gew.-% enthalten.

Vorzugsweise sind noch in der erfindungsgemäßen Zusammensetzung des Additivs (C) Fettsäuresalze enthalten. Bei den Fettsäuresalzen handelt es sich vorzugsweise um die Salze der Metalle Al, Ba, Ca, Cd, Co, Cr, Cu, Fe, Li, Mg, Mn, Ni, Pb, Sn, Sr, Zn mit höheren Fett-, Harz- u. Naphthensäuren, wie Stearate, Palmitate, Oleate, Linoleate, Resinate, Laurate, Octanoate, Ricinoleate, 12-Hydroxystearate, Naphthenate, Tallate und dergleichen. Bevorzugt sind Fettsäuren mit mehr als 12 Kohlenstoffatomen bis 30 Kohlenstoffatomen, besonders bevorzugt sind Fettsäuren mit mehr als 16 Kohlenstoffatomen bis 26 Kohlenstoffatomen, wobei die Stearate besonders bevorzugt sind, insbesondere Calciumstearat. Fettsäuresalze sind in der Zusammensetzung in Mengen von vorzugsweise 0,1 bis 10 Gew.-%, besonders bevorzugt 0,2 bis 6 Gew.-%, ganz besonders bevorzugt 0,3 bis 4 Gew.-% enthalten.

Der jeweiligen Anwendung entsprechend können Additive (D), wie beispielsweise Verarbeitungshilfsmittel, wie etwa Weichmacher, Pigmente und Stabilisatoren, wie etwa Hitzestabilisatoren, zugesetzt werden.

Beispiele für Weichmacher, die als Additive (D) eingesetzt werden können, sind mit Trimethylsiloxygruppen oder Hydroxylgruppen terminierte Dipolyorganosiloxane mit einer Viskosität von maximal 5.000 mm²/s bei 25°C oder auch Diphenylsilandiol. Die Dipolyorganosiloxane sind bevorzugt aus Dimethylsiloxaneinheiten und/oder Vinylmethylsiloxaneinheiten aufgebaut.

Beispiele für Hitzestabilisatoren, die als Additive (D) eingesetzt werden können, sind Übergangsmetallfettsäuresalze, wie Eisen- oder Ceroctoat, Titanbutylat, Übergangsmetallsilanolate, wie Eisensilanolat, Cer(IV)-Verbindungen, Russe, oder Metalloxide bzw. Metalloxidhydrate, wie beispielsweise Eisen- bzw. Titanoxid und deren Gemische.

Darüber hinaus enthalten die erfindungsgemäßen Massen vorzugsweise keine weiteren Stoffe.

Bei den jeweiligen zur Herstellung der erfindungsgemäßen Massen eingesetzten Komponenten kann es sich jeweils um eine einzelne Art einer solchen Komponente, wie auch um ein Gemisch aus mindestens zwei verschiedenen Arten einer solchen Komponente handeln.

Nach Vereinigung der einzelnen Komponenten der Zusammensetzung wird diese mit üblichen Granuliermitteln wie beispielsweise der Lochplatte und dem rotierenden Messer granuliert und es wird ein voll rieselfähiges Granulat erhalten. Das resultierende Organopolysiloxangranulat weist eine Teilchengröße von 1 bis 100 mm, vorzugsweise 2 bis 50 mm auf. Bevorzugt hat das erfindungsgemäße Organopolysiloxangranulat eine typische zylindrische Granulatstruktur mit einem Durchmesser von bevorzugt 3 bis 10 mm, besonders bevorzugt von 4 bis 8 mm und eine Höhe von bevorzugt 2 bis 10 mm, besonders bevorzugt von 3 bis 8 mm.

Vorzugsweise wird das Organopolysiloxangranulat im Anschluss an den Granulierprozess bepudert. Das Bepuderungsmittel besteht bevorzugt aus unbehandelten oder Oberflächenbehandelten mineralischen Pulvern, besonders bevorzugt wird hierbei Talkum eingesetzt.

Die erfindungsgemäß verwendeten Organopolysiloxangranulate können nach einem Verfahren erhalten werden, das dadurch gekennzeichnet ist, dass in einer Mischvorrichtung
(A) mindestens ein Polyorganosiloxan aus Einheiten der allgemeinen Formel I:

   RᵣSiO_{(4-r/2)}, (I),

   worin
   - R: unabhängig von einander, substituierte oder unsubstituierte Kohlenwasserstoffreste und
   - r: 0, 1, 2 oder 3 mit der Maßgabe, dass der durchschnittlichen Zahlenwert von r in einem Bereich von 1,9 bis 2,1 liegt, bedeuten,
(B) 1 bis 200 Gewichtsteile bezogen auf 100 Gewichtsteile des Polyorganosiloxans (A) eines verstärkenden oder nicht-verstärkenden Füllstoffs oder eines Gemisches von verstärkenden oder nicht-verstärkenden Füllstoffen,
(C) 0,01 bis 20 Gewichtsteile bezogen auf 100 Gewichtsteile des Polyorganosiloxans (A) mindestens eines Additiv zur Herstellung eines Granulats und
(D) gegebenenfalls weitere Hilfsstoffe ausgewählt aus der Gruppe enthaltend Verarbeitungshilfsmittel, Weichmacher, Pigmente und Stabilisatoren,
vermischt und anschließend mit Granuliermitteln die Organopolysiloxangranulate ausgeformt werden.

Eine bevorzugte Ausführungsform der Herstellung eines erfindungsgemäßen Organopolysiloxangranulats wird nachfolgend beschrieben. 100 Teile eines oder mehrerer durch Trialkylsiloxygruppen, besonders bevorzugt Trimethylsiloxygruppen endblockierten Dipolyorganosiloxans aus 70 bis 100%, besonders bevorzugt 90 bis 100% Dimethylsiloxaneinheiten und 0 bis 30%, besonders bevorzugt 0 bis 10% Alkenylmethylsiloxaneinheiten, besonders bevorzugt Vinylmethylsiloxaneinheiten mit einer Viskosität von vorzugsweise 10³ bis 10⁸ mPas bei 25°C, besonders bevorzugt von 10⁵ bis 10⁸ mPas bei 25°C, werden vorzugsweise in einem bei 100-250°C, besonders bevorzugt bei 120-200°C betriebenen Kneter mit vorzugsweise 0 bis 50, besonders bevorzugt mit 0,1 bis 30 Teilen an Additiven (D) und mit 1 bis 200, bevorzugt mit 30 bis 100 Teilen eines oder mehrerer verstärkender oder nicht verstärkender Füllstoffe (B) oder Gemische von beiden vermischt und vorzugsweise 10 Minuten bis 12 Stunden, besonders bevorzugt 30 Minuten bis 6 Stunden lang geknetet.

Im Falle verstärkender Füllstoffe werden vorzugsweise pyrogene oder gefällte Kieselsäuren mit BET-Oberflächen von mindestens 50 m²/g, besonders bevorzugt von mindestens 100 m²/g, eingesetzt. Im Falle nichtverstärkender Füllstoffe werden vorzugsweise Quarzmehl, Diatomeenerde, Calciumsilikat, Zirkoniumsilikat, Zeolithe, Metalloxid- und Metalloxidhydratpulver, wie Aluminium-, Titan-, Eisen-, Magnesium- oder Zinkoxid bzw. -oxidhydrat, Bariumsulfat, Calciumcarbonat, Gips, Polytetrafluorethylenpulver, Glasfasern und Kunststofffasern eingesetzt.

Als Additive (D) werden vorzugsweise Verarbeitungshilfsmittel, wie Weichmacher, Pigmente und Stabilisatoren, wie Hitzestabilisatoren, zugesetzt. In einer besonders bevorzugten Ausführungsform werden als Weichmacher mit Trimethylsilylgruppen oder Hydroxylgruppen terminierte Polydiorganosiloxane mit einer Viskosität von maximal 5.000 mm²/s bei 25°C eingesetzt.

Anschließend werden 0,01 bis 20 Gew.-%, bevorzugt 0,1 bis 4 Gew.-% und besonders bevorzugt 0,1 bis 2 Gew.-% des in EP 1 028 140 A1 beschriebenen Additivs zugesetzt und vorzugsweise mit üblichen Granuliermitteln wie einer Lochplatte und einem rotierenden Messer granuliert. Der Durchmesser der Lochplatte beträgt besonders bevorzugt 3 bis 10 mm, ganz besonders bevorzugt 4 bis 8 mm.

Vorzugsweise wird das Organopolysiloxangranulat im Anschluss an den Granulierprozess bepudert. Das Bepuderungsmittel besteht bevorzugt aus unbehandelten oder Oberflächenbehandelten mineralischen Pulvern, besonders bevorzugt wird hierbei Talkum eingesetzt.

Vorzugsweise wird die Herstellung des Organopolysiloxangranulats auch mittels kontinuierlicher beheizter Mischeinrichtungen anstelle des Kneters durchgeführt.

Das erfindungsgemäße Organopolysiloxangranulat weist eine Lagerbeständigkeit und damit einwandfreie Verarbeitbarkeit von mindestens 6 Monaten auf.

Beispiele für thermoplastische Kunststoffe, in denen die erfindungsgemäßen Organopolysiloxangranulate Verwendung als Additiv finden, sind Polyolefine, wie zum Beispiel Polyethylene niederer und hoher Dichte (LDPE, LLDPE, HDPE), Homo- und Copolymere des Propylens mit beispielsweise Ethylen, Buten, Hexen, und Octen (PP), Polybutylene, wie Polyisobutylen (PIB), Olefincopolymere, wie zum Beispiel Ethylen-Methylacrylat-Copolymer (EMA) und Ethylen-Vinylacetat-Copolymer (EVA); ferner Polyvinylchlorid (PVC), Polymere von Vinylacetat-Vinylchlorid (PVCA) sowie Polystyrole (PS, HIPS, EPS) und Styrolcopolymere, beispielsweise Polymere von Acrylnitril-Butadien-Styrol (ABS), Acrylester-Acrylnitril-Styrol (ASA) und Acrylnitril-Styrol (SAN); ferner technische Kunststoffe wie Polyacetale (POM), Polyacrylnitril (PAN), Polyamide (beispielsweise PA 6, PA 6.6, PA 12), Polycarbonate (PC), Polyester, wie Polyethylenterephthalat (PET) und Polybutylenterephthalat (PBT), Polyacrylate und Polymethacrylate, wie Polymethylmethacrylat (PMMA), Polymere von Acrylnitril-Butadien-Methylmethacrylat-Styrol (MABS), Acrylnitril-Methylmethacrylat (AMMA), Acrylsäureester-Ethylen (EEA), Methylacrylat-Vinylchlorid (VC/MA) und Methylmethacrylat-Vinylchlorid (VC/MMA), sowie Polyphenylenether (PPE) und Blends, wie PC/ABS, PC/ASA, PPE/PS, PPE/PA, PBT/PET, PBT/PC, PA/ABS, PA/PP; weiterhin Hochleistungskunststoffe, wie flüssigkristalline Polyester (LCP), Polysulfon (PSU), Polyphenylensulfon (PPSU), Polyethersulfon (PES), Polyphenylensulfid (PPS), Polyimid (PI), Polyesterimid (PEI), Polyether-block-amid (PEBA), Polyaryletherketon (PAEK), Polyetheretherketon (PEEK); weiterhin thermoplastisches Polyurethan (PUR) und Thermoplastische Elastomere (TPE) auf Styrol und Olefinen basierend (TES, TEO).

Das erfindungsgemäße Organopolysiloxangranulat wird in den thermoplastischen Kunststoff gemäss dem Fachmann bekannten Stand der Technik eingearbeitet. Die Einarbeitung wird bei erhöhter Temperatur nach konventionellen Methoden zur Verteilung fester Additivbestandteile in Thermoplaste durchgeführt. Dazu kann beispielsweise eine Vorabmischung der Organopolysiloxangranulate mit dem Thermoplastgranulat in einem Trockenmischer erfolgen. Beispiele für geeignetes Equipment zur nachfolgenden Einarbeitung sind Einschnecken- und Doppelschneckenextruder zur kontinuierlichen Einarbeitung oder Kneter zur diskontinuierlichen Einarbeitung. Temperatur und andere Bedingungen für die Einarbeitung sind abhängig vom jeweiligen Thermoplasten und dem Fachmann bekannt bzw. durch Routineversuche zu ermitteln; generell liegen die Einarbeitungstemperaturen zwischen der Erweichungstemperatur und der Zersetzungstemperatur des Thermoplasten. Nach der Einarbeitung bei erhöhter Temperatur auf geeignetem Verarbeitungsequipment kann der erhaltene Compound mit konventionellen Techniken weiterverarbeitet werden, beispielsweise durch Spritzgießen, Blasformen, Formpressen oder Vakuumtiefziehen, um entsprechende Kunststoffteile herzustellen.

Das erfindungsgemäße Organopolysiloxangranulat wird als Additiv im Mengen von vorzugsweise 0.05 bis 50 Gew.-%, besonders bevorzugt von 0,1 bis 30 Gew.-%, bezogen auf den thermoplastischen Kunststoff, zugesetzt. Durch den Zusatz des erfindungsgemäßen Organopolysiloxangranulats werden Verarbeitungsvorteile und Verbesserungen der Oberflächeneigenschaften der Kunststoffteile erzielt; dazu zählen beispielsweise Reduzierung des Drehmoments, verbesserter Durchsatz, reduzierter Verschleiß sowie niedrigerer Energieverbrauch bei der Verarbeitung; weiterhin leichtere Verarbeitbarkeit, Erniedrigung der Schmelzviskosität, bessere Entformbarkeit, niedrigerer Ausschuss und schnellere Taktzeiten bei Formgebungsprozessen; darüber hinaus niedrigerer Reibungskoeffizient, bessere Gleiteigenschaften, verbesserte Abriebfestigkeit, verbessertes Brennverhalten verbunden mit besseren Flammschutzeigenschaften, sowie verbesserte Kratzfestigkeit und Oberflächenglätte bei den Compounds und den Formteilen.

### Beispiel 1

### Herstellung von Organopolysiloxangranulat

100 Teile eines durch Trimethylsiloxygruppen endblockierten Diorganopolysiloxans aus 70 bis 100 Mol% Dimethylsiloxaneinheiten und 0 bis 30 Mol% Vinylmethylsiloxaneinheiten mit einer Viskosität von 10⁵ bis 10⁸ mPas bei 25°C werden in einem bei 120 bis 200°C betriebenen Kneter mit 10 Teilen eines mit Hydroxylgruppen terminierten Dipolyorganosiloxans aus Dimethylsiloxaneinheiten und Vinylmethylsiloxaneinheiten mit einer Viskosität von 1.000 bis 5000 mm²/s bei 25°C sowie mit 35 Teilen pyrogen in der Gasphase erzeugtem Siliciumdioxid mit einer Oberfläche von 300 m²/g und mit 18 Teilen pyrogen in der Gasphase erzeugtem Siliciumdioxid mit einer Oberfläche von 150 m²/g versetzt und für 2 Stunden geknetet. Die Mischung wird anschließend mit 0,13 Teilen Borsäure und 0,3 Teilen voll entsalztem Wasser versetzt und weitere 3 Stunden bei 150°C geknetet, wobei das als Lösungsmittel für die Borsäure dienende Wasser entfernt wird und anschließend zu einem voll rieselfähigen Organopolysiloxangranulat verarbeitet. Als Fertigungseinrichtung dafür dient ein Extruder mit einem am Spritzkopf aufgesetztem rotierendem Messer. Das Organopolysiloxangranulat wird im Anschluss an den Granulierprozess mit Talkum bepudert. Das resultierende Organopolysiloxangranulat weist eine einheitliche zylindrische Granulatstruktur mit einem Durchmesser von ca. 3 mm und einer Höhe von 2 bis 4 mm auf.

### Vergleichsbeispiel 1

Beispiel 1 wird wiederholt, ohne dass die Mischung mit 0,13 Teilen Borsäure und 0,3 Teilen voll entsalztem Wasser versetzt wird. Das erhaltene Organopolysiloxan ist nicht granulierbar sondern verschmiert lediglich Lochplatte und Messer.

### Beispiel 2

### Herstellung von Organopolysiloxangranulat

100 Teile eines durch Trimethylsiloxygruppen endblockierten Diorganopolysiloxans aus 70 bis 100 Mol% Dimethylsiloxaneinheiten und 0 bis 30 Mol% Vinylmethylsiloxaneinheiten mit einer Viskosität von 10⁵ bis 10⁸ mPas bei 25°C werden in einem bei 120 bis 200°C betriebenen Kneter mit 15 Teilen eines mit Hydroxylgruppen terminierten Dipolyorganosiloxans aus Dimethylsiloxaneinheiten und Vinylmethylsiloxaneinheiten mit einer Viskosität von 10 bis 1.000 mm²/s bei 25°C, mit 0,13 Teilen Borsäure und 0,3 Teilen voll entsalztem Wasser sowie anschließend mit 30 Teilen pyrogen in der Gasphase erzeugtem Siliciumdioxid mit einer Oberfläche von 300 m²/g und mit 30 Teilen pyrogen in der Gasphase erzeugtem Siliciumdioxid mit einer Oberfläche von 150 m²/g versetzt und für 3 Stunden bei 150°C geknetet, wobei das als Lösungsmittel für die Borsäure dienende Wasser entfernt wird. Die Mischung wird anschließend zu einem voll rieselfähigen Organopolysiloxangranulat verarbeitet. Als Fertigungseinrichtung dafür dient ein Extruder mit einem am Spritzkopf aufgesetztem rotierendem Messer. Das Organopolysiloxangranulat wird im Anschluss an den Granulierprozess mit Talkum bepudert. Das resultierende Organopolysiloxangranulat weist eine einheitliche zylindrische Granulatstruktur mit einem Durchmesser von ca. 5 mm und einer Höhe von 4 bis 7 mm auf.

### Vergleichsbeispiel 2

Beispiel 2 wird wiederholt, ohne dass die Mischung mit 0,13 Teilen Borsäure und 0,3 Teilen voll entsalztem Wasser versetzt wird. Das erhaltene Organopolysiloxan ist nicht granulierbar sondern verschmiert lediglich Lochplatte und Messer.

### Beispiel 3

### Herstellung von Organopolysiloxangranulat

100 Teile eines durch Trimethylsiloxygruppen endblockierten Diorganopolysiloxans aus 70 bis 100 Mol% Dimethylsiloxaneinheiten und 0 bis 30 Mol% Vinylmethylsiloxaneinheiten mit einer Viskosität von 10⁵ bis 10⁸ mPas bei 25°C werden in einem bei 120 bis 200°C betriebenen Kneter mit 14 Teilen eines mit Hydroxylgruppen terminierten Dipolyorganosiloxans aus Dimethylsiloxaneinheiten und Vinylmethylsiloxaneinheiten mit einer Viskosität von 10 bis 1.000 mm²/s bei 25°C sowie mit 10 Teilen pyrogen in der Gasphase erzeugtem Siliciumdioxid mit einer Oberfläche von 300 m²/g und mit 41 Teilen pyrogen in der Gasphase erzeugtem Siliciumdioxid mit einer Oberfläche von 200 m²/g versetzt und für 2 Stunden geknetet. Die Mischung wird mit 1,5 % eines Additivs versetzt, das hergestellt wird, indem 100 Teile eines Dimethylpolysiloxans mit einer Viskosität von 6x10⁶ bis 8x10⁶ mPas bei 25°C mit 13 Teilen Borsäure, 46 Teilen pyrogen in der Gasphase erzeugtem Siliciumdioxid mit einer Oberfläche von 150 m²/g sowie mit 5 Teilen Calciumstearat und 30 Teilen voll entsalztem Wasser in einem Kneter vermischt und 3 Stunden bei 150°C unter Stickstoffatmosphäre geknetet werden, wobei das als Lösungsmittel für die Borsäure dienende Wasser abgezogen wird, und anschließend zu einem voll rieselfähigen Organopolysiloxangranulat verarbeitet. Als Fertigungseinrichtung dafür dient ein Extruder mit einem am Spritzkopf aufgesetztem rotierendem Messer. Das Organopolysiloxangranulat wird im Anschluss an den Granulierprozess mit Talkum bepudert. Das resultierende Organopolysiloxangranulat weist eine einheitliche zylindrische Granulatstruktur mit einem Durchmesser von ca. 6 mm und einer Höhe von 4 bis 7 mm auf.

### Vergleichsbeispiel 3

Beispiel 3 wird wiederholt, ohne dass das Additiv, hergestellt aus Dimethylpolysiloxan, Borsäure, Siliciumdioxid, Calciumstearat und voll entsalztem Wasser zugegeben wird. Das erhaltene Organopolysiloxan ist nicht granulierbar sondern verschmiert lediglich Lochplatte und Messer.

### Beispiel 4

### Herstellung von Compounds aus Thermoplast und Organopolysiloxangranulat

Für die Versuche in Beispiel 4 wird das Organopolysiloxangranulat aus Beispiel 3 verwendet. Die Zusammensetzung der hergestellten Compounds ist in Tabelle 1 beschrieben.

Folgende thermoplastische Kunststoffe werden eingesetzt: Polyethylen niederer Dichte (LDPE): Lupolen 2420 H (Fa. Basell) Polyethylen hoher Dichte (HDPE): Lupolen 5031 L (Fa. Basell) Polypropylen (PP): Moplen HP 456 H (Fa. Basell).

Zur Herstellung der Compounds werden Kunststoffgranulat und Organopolysiloxangranulat zuerst in den Mengenanteilen gemäss Tabelle 1 gemischt und anschließend auf einem gleichlaufenden Doppelschneckenextruder (ZE 25, Fa. Berstorff) extrudiert. Die Prozessparameter dazu sind nachfolgend beschrieben:
- Durchsatz: 5 kg / Stunde
- Schneckendrehzahl: 400 Umdrehungen pro Minute
- L/D-Verhältnis: 33 D
- Temperaturprofil für LDPE und HDPE: 110°C bis 200°C, 6 Heizzonen.
- Temperaturprofil für PP: 220°C bis 240°C, 6 Heizzonen.

**Tabelle 1: Zusammensetzung der hergestellten Compounds:**

| Compound | Anteil Thermoplast | Anteil Organopolysiloxangranulat |
|---|---|---|
| 1 | 99,27 Gew.-% LDPE | 0,73 Gew.-% |
| 2 | 99,27 Gew.-% HDPE | 0,73 Gew.-% |
| 3 | 98,55 Gew.-% LDPE | 1,45 Gew.-% |
| 4 | 98,55 Gew.-% HDPE | 1,45 Gew.-% |
| 5 | 98,55 Gew.-% PP | 1,45 Gew.-% |
| 6 | 92.75 Gew.-% LDPE | 7,25 Gew.-% |
| 7 | 92.75 Gew.-% HDPE | 7,25 Gew.-% |
| 8 | 92.75 Gew.-% PP | 7,25 Gew.-% |
| 9 | 85,5 Gew.-% LDPE | 14,5 Gew.-% |
| 10 | 85,5 Gew.-% HDPE | 14,5 Gew.-% |
| 11 | 85,5 Gew.-% PP | 14,5 Gew.-% |

### Beispiel 5

### Bestimmung des Drehmoments von Compounds aus Thermoplast und Organopolysiloxangranulat (Drehmomenterniedrigung durch Organopolysiloxangranulatzusatz)

Die Bestimmung des Drehmoments wird auf einem Einschneckenextruder (Fa. Goettfert) durchgeführt. Die Prozessparameter sind nachfolgend beschrieben:
- Füllgrad: 100%; Durchsatz: variabel.
- Schneckendrehzahl: 30 Umdrehungen pro Minute
- L/D-Verhältnis: 30 D
- Temperaturprofil 160°C bis 200°C; 4 Heizzonen
- Laufzeit: 30 Minuten pro Compound bzw. Thermoplast

Die Ergebnisse sind in Tabelle 2 beschrieben. Hierbei wird das Drehmoment des Compounds auf das Drehmoment des jeweiligen Thermoplasten ohne Organopolysiloxangranulatzusatz bezogen (100 %) und in % (bezogen auf 100%) beschrieben.

**Tabelle 2: Erniedrigung des Drehmoments durch Organopolysiloxangranulat-Zusatz**

| Compound | Anteil Thermoplast | Anteil Organopolysiloxangranulat | Drehmoment |
|---|---|---|---|
| LDPE | 100 Gew.-% LDPE | 0 Gew.-% | 100 % |
| 1 | 99,27 Gew.-% LDPE | 0,73 Gew.-% | 43 % |
| HDPE | 100 Gew.-% HDPE | 0 Gew.-% | 100 % |
| 2 | 99,27 Gew.-% HDPE | 0,73 Gew.-% | 87 % |

### Beispiel 6

### Bestimmung der Schmelze-Massenfließrate von Compounds aus Thermoplast und Organopolysiloxangranulat gemäss EN ISO 1133

Die Bestimmung der Schmelze-Massenfließrate wird auf einem Schmelzindex-Testgerät (Fa. Goettfert) gemäss EN ISO 1133 durchgeführt. Für die Messung werden jeweils 6 g an Compound bzw. Thermoplast eingesetzt. Die Ergebnisse sind in Tabelle 3 beschrieben. Die Prozessparameter sind nachfolgend aufgeführt:
- Zylindertemperatur: 190°C
- Aufheizzeit: 4 Minuten
- Nennlast: 21,6 kg

**Tabelle 3: Schmelzindex von Thermoplasten und von Compounds aus Thermoplast und Organopolysiloxangranulat**

| Compound | Anteil Thermoplast | Anteil Organopolysiloxangranulat | Schmelzindex (MFI) in g/10 Min |
|---|---|---|---|
| LDPE | 100 Gew.-% LDPE | 0 Gew.-% | 129 |
| 3 | 98,55 Gew.-% LDPE | 1,45 Gew.-% | 136 |
| 6 | 92.75 Gew.-% LDPE | 7,25 Gew.-% | 150 |
| HDPE | 100 Gew.-% HDPE | 0 Gew.-% | 258 |
| 4 | 98,55 Gew.-% HDPE | 1,45 Gew.-% | 278 |
| 7 | 92.75 Gew.-% HDPE | 7,25 Gew.-% | 292 |

### Beispiel 7

### Bestimmung des Abriebs von Compounds aus Thermoplast und Organopolysiloxangranulat nach dem Reibradverfahren in Anlehnung an DIN 53 754

Die Bestimmung der Abriebfestigkeit in Anlehnung an DIN 53 754 wird auf einem Reibradgerät TABER ABRASER Modell 5131 (Fa. Erichsen) durchgeführt. Die Ergebnisse sind in Tabelle 4 beschrieben. Zur Herstellung der Probekörper werden aus den Compounds Nr. 3 bis 8 sowie aus LDPE, HDPE und PP Pressplatten mit einer Dicke von 2 mm hergestellt. Aus diesen Pressplatten werden kreisförmige Probekörper mit einem Durchmesser von 90 mm und einem Innenlochdurchmesser von 7 mm gestanzt. Die Prüfparameter sind nachfolgend gelistet:
- Anzahl der Umdrehungen: 200
- Belastung 5,4 ± 0,2 N pro Reibrad (2 Reibräder)
- Reibrollen: H-18 CALIBRADE-Reibrollen

**Tabelle 4: Abriebfestigkeit von Thermoplasten und von Compounds aus Thermoplast und Organopolysiloxangranulat**

| Compound | Anteil Thermoplast | Anteil Organopolysiloxangranulat | Abrieb in mg |
|---|---|---|---|
| LDPE | 100 Gew.-% LDPE | 0 Gew.-% | 19,9 |
| 3 | 98,55 Gew.-% LDPE | 1,45 Gew.-% | 7,9 |
| 6 | 92.75 Gew.-% LDPE | 7,25 Gew.-% | 7,4 |
| HDPE | 100 Gew.-% HDPE | 0 Gew.-% | 12,4 |
| 4 | 98,55 Gew.-% HDPE | 1,45 Gew.-% | 7,2 |
| 7 | 92.75 Gew.-% HDPE | 7,25 Gew.-% | 1,8 |
| PP | 100 Gew.-% PP | 0 Gew.-% | 21,1 |
| 5 | 98,55 Gew.-% PP | 1,45 Gew.-% | 19,0 |
| 8 | 92.75 Gew.-% PP | 7,25 Gew.-% | 12,8 |

## Patentansprüche

1. Verwendung eines Organopolysiloxangranulats enthaltend
(A) mindestens ein Polyorganosiloxan aus Einheiten der allgemeinen Formel I:
RᵣSiO_{(4-r/2)} (I),
worin
R unabhängig von einander, substituierte oder unsubstituierte Kohlenwasserstoffreste und
r 0, 1, 2 oder 3 mit der Maßgabe, dass der durchschnittlichen Zahlenwert von r in einem Bereich von 1,9 bis 2,1 liegt, bedeuten,
(B) 1 bis 200 Gewichtsteile bezogen auf 100 Gewichtsteile des Polyorganosiloxans (A) eines verstärkenden oder nicht-verstärkenden Füllstoffs oder eines Gemisches von verstärkenden oder nicht-verstärkenden Füllstoffen,
(C 0,01 bis 20 Gewichtsteile bezogen auf 100 Gewichtsteile des Polyorganosiloxans (A) mindestens eines Additiv zur Herstellung eines Granulats und
(D) gegebenenfalls weitere Hilfsstoffe ausgewählt aus der Gruppe enthaltend Verarbeitungshilfsmittel, Weichmacher, Pigmente und Stabilisatoren, mit der Maßgabe, dass das Organopolysiloxangranulat eine Teilchengröße von 1 bis 100 mm aufweist, als Additiv für thermoplastische Kunststoffe.

2. Verwendung nach Anspruch 1, **dadurch gekennzeichnet, dass** die Polyorganosiloxane (A) Diorganosiloxaneinheiten, wobei gegebenenfalls ein oder mehrere der Alkylgruppen durch Hydroxygruppen oder Alkoxygruppen ersetzt sein können, enthalten, die Endgruppen ausgewählt aus der Gruppe enthaltend Trialkylsiloxygruppen, Trimethylsiloxyrest, Dimethylhydroxylsiloxyrest und Dimethylvinylsiloxyrest aufweisen.

3. Verwendung nach Anspruch 1 oder 2, **dadurch gekennzeichnet, dass** es sich bei den Polyorganosiloxanen (A) um Flüssigkeiten oder hochviskose Substanzen handelt.

4. Verwendung nach mindestens einem der Ansprüche 1 bis 3, **dadurch gekennzeichnet, dass** als Weichmacher mit Trimethylsiloxygruppen oder Hydroxylgruppen terminierte Dipolyorganosiloxane mit einer Viskosität von maximal 5.000 mm²/s bei 25°C oder Diphenylsilandiol eingesetzt werden.

5. Verwendung nach mindestens einem der Ansprüche 1 bis 4, **dadurch gekennzeichnet, dass** als Additiv (C) eine Zusammensetzung enthaltend Borsäure, Wasser und gegebenenfalls Fettsäuresalze zugegeben wird.

6. Verwendung nach mindestens einem der Ansprüche 1 bis 5, **dadurch gekennzeichnet, dass** das Organopolysiloxangranulat eine zylindrische Granulatstruktur mit einem Durchmesser von 3 - 10 mm und einer Höhe von 2 bis 10 mm aufweist.

7. Verwendung nach mindestens einem der Ansprüche 1 bis 6, **dadurch gekennzeichnet, dass** das Organopolysiloxangranulat durch eine Lochplatte und ein rotierendes Messer erhalten wird.

8. Verwendung nach mindestens einem der Ansprüche 1 bis 7, **dadurch gekennzeichnet, dass** das Organopolysiloxangranulat im Anschluss an den Granulierprozess bepudert wird.

## Revendications

1. Utilisation d'un granulat d'organopolysiloxane contenant
(A) au moins un polyorganosiloxane constitué par des unités de formule générale I:
RᵣSiO_{(4-r/2)}) (I)
dans laquelle
R signifie, indépendamment l'un de l'autre des radicaux hydrocarbonés substitués ou non substitués et
r vaut 0, 1, 2 ou 3, à condition que la valeur numérique moyenne de r se situe dans une plage de 1,9 à 2,1,
(B) 1 à 200 parties en poids par rapport à 100 parties en poids du polyorganosiloxane (A) d'une charge renforçante ou non renforçante ou d'un mélange de charges renforçantes ou non renforçantes,
(C) 0,01 à 20 parties en poids par rapport à 100 parties en poids du polyorganosiloxane (A) d'au moins un additif pour la préparation d'un granulat et
(D) le cas échéant d'autres adjuvants choisis dans le groupe contenant les adjuvants de transformation, les plastifiants, les pigments et les stabilisateurs,
à condition que le granulat d'organopolysiloxane présente une grosseur de particules de 1 à 100 mm, comme additif pour les matériaux synthétiques thermoplastiques.

2. Utilisation selon la revendication 1, **caractérisée en ce que** les polyorganosiloxanes (A) présentent des unités diorganosiloxane, un ou plusieurs groupes alkyle pouvant le cas échéant être remplacés par des groupes hydroxy ou alcoxy, les groupes terminaux étant choisis dans le groupe contenant les groupes trialkylsiloxy, le radical triméthylsiloxy, le radical diméthylhydroxylsiloxy et le radical diméthylvinylsiloxy.

3. Utilisation selon la revendication 1 ou 2, **caractérisée en ce qu'**il s'agit pour les polyorganosiloxanes (A) de liquides ou de substances hautement visqueuses.

4. Utilisation selon au moins l'une quelconque des revendications 1 à 3, **caractérisée en ce qu'**on utilise, comme plastifiants, des dipolyorganosiloxanes terminés par des groupes triméthylsiloxy ou des groupes hydroxyle présentant une viscosité d'au maximum 5000 mm²/s à 25°C ou du diphénylsilanediol.

5. Utilisation selon au moins l'une quelconque des revendications 1 à 4, **caractérisée en ce qu'**on utilise comme additif (C) une composition contenant de l'acide borique, de l'eau et le cas échéant des sels d'acide gras.

6. Utilisation selon au moins l'une quelconque des revendications 1 à 5, **caractérisée en ce que** le granulat d'organopolysiloxane présente une structure de granulat cylindrique présentant un diamètre de 3 à 10 mm et une hauteur de 2 à 10 mm.

7. Utilisation selon au moins l'une quelconque des revendications 1 à 6, **caractérisée en ce que** le granulat d'organopolysiloxane est obtenu par une plaque trouée et un couteau rotatif.

8. Utilisation selon au moins l'une quelconque des revendications 1 à 7, **caractérisée en ce que** le granulat d'organopolysiloxane est saupoudré après le processus de granulation.

## Claims

1. Use of a pelletized organopolysiloxane material comprising
(A) at least one polyorganosiloxane composed of units of the general formula I:
RᵣSiO_{(4-r/2)} (I),
where
R independently of one another, are substituted or unsubstituted hydrocarbon radicals, and
r is 0, 1, 2 or 3, with the proviso that the average numerical value of r is in the range from 1.9 to 2.1,
(B) from 1 to 200 parts by weight, based on 100 parts by weight of the polyorganosiloxane (A), of a reinforcing or non-reinforcing filler, or of a mixture of reinforcing or non-reinforcing fillers,
(C) from 0.01 to 20 parts by weight, based on 100 parts by weight of the polyorganosiloxane (A) of at least one additive for producing pellets, and
(D) where appropriate, other auxiliaries selected from the group consisting of processing aids, plasticizers, pigments, and stabilizers, with the proviso that its particle size is from 1 to 100 mm, as an additive for thermoplastics.

2. Use according to Claim 1, **characterized in that** the polyorganosiloxanes (A) contain diorganosiloxane units, where, if appropriate, one or more of the alkyl groups may have been replaced by hydroxy groups or by alkoxy groups, the end groups of which have been selected from the group consisting of trialkylsiloxy groups, trimethylsiloxy radical, dimethylhydroxysiloxy radical, and dimethylvinylsiloxy radical.

3. Use according to Claim 1 or 2, **characterized in that** the polyorganosiloxanes (A) comprise liquids or high-viscosity substances.

4. Use according to at least one of Claims 1 to 3, **characterized in that** use is made of dipolyorganosiloxanes terminated with trimethylsiloxy groups or with hydroxy groups and having a viscosity of not more than 5000 mm²/s at 25°C or diphenylsilanediol, as plasticizers.

5. Use according to at least one of Claims 1 to 4, **characterized in that** a composition comprising boric acid, water, and, where appropriate, fatty acid salts is added as additive (C).

6. Use according to at least one of Claims 1 to 5, **characterized in that** the pelletized organopolysiloxane material has a cylindrical pellet structure with a diameter of from 3 to 10 mm and a height of from 2 to 10 mm.

7. Use according to at least one of Claims 1 to 6, **characterized in that** a perforated plate and a rotating knife are used to obtain the pelletized organopolysiloxane material.

8. Use according to at least one of Claims 1 to 7, **characterized in that**, following the pelletizing process, the pelletized organopolysiloxane material is powdered.
